Europäisches Patentamt

European Patent Office

Office européen des brevets

(19)

(11) Numéro de publication: **0 072 749**

**A1**

(12)

# DEMANDE DE BREVET EUROPEEN

(21) Numéro de dépôt: 82401512.7

(22) Date de dépôt: 10.08.82

(51) Int. Cl.³: **B 23 B 39/16**
**B 23 B 39/00**

(30) Priorité: 11.08.81 FR 8115510

(43) Date de publication de la demande:
23.02.83 Bulletin 83/8

(84) Etats contractants désignés:
AT BE CH DE GB IT LI LU NL SE

(71) Demandeur: Labbe, Benoît
7, rue du Général de Gaulle
F-22400 Lamballe(FR)

(72) Inventeur: Labbe, Benoît
7, rue du Général de Gaulle
F-22400 Lamballe(FR)

(74) Mandataire: Derambure, Christian
Cabinet BUGNION ASSOCIES SARL 116, boulevard
Haussmann
F-75008 Paris(FR)

(54) Dispositif de perçage automatique de panneaux plans, notamment de ridelles de véhicules.

(57) L'invention concerne un dispositif de perçage de panneaux plans.

Un dispositif de perçage de panneaux plans pleins constitués d'éléments de remplissage coplanaires juxtaposés, pour effectuer des perforations alignées sur au moins une ligne de perforations est caractérisé en ce qu'il comporte :

- des moyens de maintien (4) verticalement du panneau, et agissant perpendiculairement au plan PP du panneau,

- des moyens de perçage (5), agissant perpendiculairement au plan du panneau,

- des moyens de positionnement (6) des moyens de perçage (5) en regard de la ligne de perforations et des moyens de déplacement des moyens de perçage (5) au moins le long de la ligne de perforations.

L'invention est applicable aux ridelles de véhicule.

FIG.1

1

## Dispositif de perçage automatique de panneaux plans, notamment de ridelles de véhicules.

On connaît des ridelles de véhicules réalisées par juxtaposition d'une pluralité d'éléments de remplissage coplanaires, les éléments de remplissage étant autoportants et directement fixés au châssis qui les supporte. Chaque élément de remplissage a en section droite transversale, une forme de U aplati ayant une âme plane et lisse extérieurement et deux ailes tournées vers la face interne de la ridelle. Deux éléments de remplissage adjacents sont rigidement solidarisés entre eux à l'endroit de leurs ailes, à l'aide de rivets. On constitue ainsi de proche en proche un panneau rigide. Le montage d'un tel panneau se fait sur des traverses-supports constituant soit le brancard de pavillon , soit le profil de rive, formant respectivement la partie supérieure et la partie inférieure de la caisse du véhicule à réaliser. Pour fixer le panneau plan sur le brancard de pavillon ou le profil de rive, on effectue une fixation à l'aide de rivets traversant des perforations réalisées en haut et en bas du panneau. Des perforations verticales permettent une fixation des panneaux latéraux.

On prévoit donc des panneaux comportant des séries de perforations selon des lignes parallèles horizontales disposées l'une le long du bord extrême supérieur et l'autre le long du bord extrême inférieur de chaque élément de remplissage. On prévoit, de préférence pour les éléments de remplissage latéraux du panneau réalisé, des séries de perforations alignées et verticales.

Il est donc nécessaire que la série de perforations situées sur la partie plane d'un élément de remplissage, dans la partie supérieure ou dans la partie inférieure, soit dans le prolongement de la série de perforations correspondantes, situées sur l'élément de remplissage adjacent. Puisqu'on effectue les lignes de perforations sur chacun des éléments de remplissage, avant le montage de ceux-ci, et qu'on les fixe pour former le panneau plan, on doit effectuer un réglage minutieux des dispositifs de perçage, pour que toutes les perforations soient situées dans le prolongement les unes des autres, à savoir sur une ligne, de préférence parfaitement horizontale ou parfaitement verticale. On conçoit donc que si on réalise les perforations sur chaque élément avant son assemblage, il y a des erreurs de position des différentes perforations. Celles-ci ne se trouvent donc pas dans le prolongement les unes des autres. Le montage du panneau plein sur les traverses supports formant le brancard de pavillon et le profil de rive, et comportant des perforations correspondantes aux perforations du panneau, est rendu plus difficile.

Par conséquent, un but de la présente invention est d'effectuer des perforations dans un panneau constitué de plusieurs éléments juxtaposés, les perforations étant situées sur une droite, disposées horizontalement, à la partie supérieure et la partie inférieure du panneau et disposés verticalement dans les parties extrêmes latérales du panneau.

Un autre but de la présente invention est d'automatiser le plus possible les perforations afin que l'opération de perçage soit le plus rapide possible et demande le moins de main d'oeuvre possible.

A cet effet, l'invention propose un dispositif de perçage automatique d'une panneau plan plein constitué d'éléments de remplissage coplanaires juxtaposés, de façon à effectuer des perforations alignées sur au moins une ligne de perforations, le dispositif comportant : des moyens de maintien du panneau perpendiculairement au plan du panneau, des moyens de perçage perpendiculairement au plan du panneau, et des moyens de positionnement des moyens de perçage sur la ligne de perforations. Les moyens de positionnement des moyens de perçage sont constitués par des moyens de guidage coopérant avec les frises des traverses supports supérieures et inférieures du véhicule.

Un procédé de réalisation de perforations dans un panneau plan comporte au moins un cycle comprenant les étapes suivantes : on maintient le panneau, on met en place une unité de plusieurs moyens de perçage, de préférence au nombre de six, on effectue les perforations, on relâche le panneau et on effectue une translation de l'unité de moyen de perçage.

Un tel procédé de réalisation de perforations dans un panneau plan a l'avantage de ne comporter que des opérations automatisées ou semi-automatisées et par là très rapides. Par ailleurs,les rangées de perforations sont rigoureusement rectilignes et la rangée supérieure est parfaitement parallèle à la rangée inférieure des rangées de perforations verticales disposées aux extrémités latérales du panneau sont rigoureusement perpendiculaires auxrangées précédentes. Enfin, le dispositif de perçage de panneaux pleins comporte des appareillages simples et peu coûteux qui peuvent être utilisés par un personnel non spécialisé avec une grande rapidité et une grande fiabilité. Par ailleurs, plusieurs perforations sont réalisées simultanément.

Les autres caractéristiques de l'invention seront bien comprises grâce à la description suivante, en référence aux dessins annexés dans lesquels :

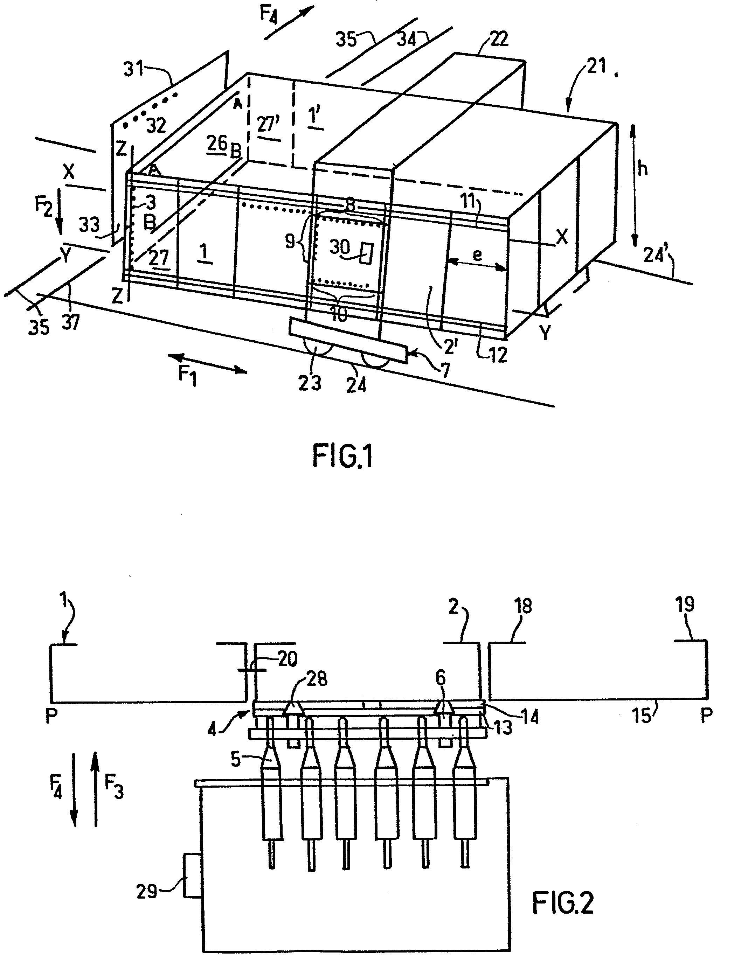

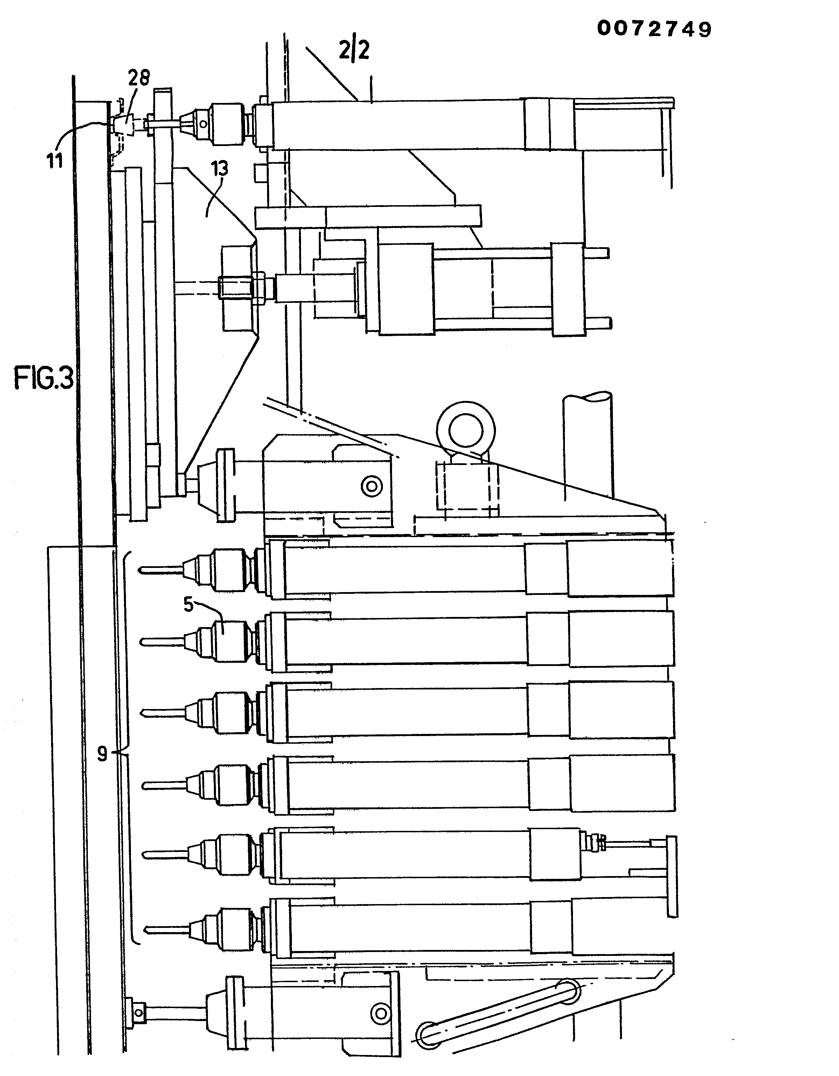

La figure 1 est une vue schématique, en perspective, d'un dispositif selon l'invention, utilisé pour effectuer des lignes de perforations sur les côtés latéraux gauche et droit et pour des lignes de perforations de la face avant d'une caisse de véhicule formée par des panneaux plans ; la figure 2 est une vue de dessus d'une partie du dispositif de perçage selon l'invention ; la figure 3 est une vue de côté, verticale d'une partie du dispositif selon l'invention .

Sur la figure 1 on voit un dispositif de perçage selon l'invention, de panneaux plans, pleins 1, constitués d'éléments de remplissage coplanaires juxtaposés 2. On désire effectuer des perforations 3 alignées, par exemple des perforations situées sur la ligne XX horizontale supérieure. Le dispositif de perçage comporte notamment des moyens de maintien 4 du panneau 1 verticalement, c'est-à-dire dans la position relative définitive. Ces moyens agissent perpendiculairement au plan du panneau. Des moyens de perçage 5 agissent eux aussi perpendiculairement au plan PP du panneau (voir figure 2). Pour placer correctement les moyens de perçage 5 en regard de la ligne de perforations XX, on utilise des moyens de positionnement 6. Par ailleurs, les moyens de perçage 5 peuvent se déplacer au moins le long de la ligne de perforations XX. Pour ce faire, on utilise des moyens de déplacement 7.

Les moyens de perçage 5 sont assemblés selon des unités formant bloc. Chaque unité comporte au moins deux moyens de perçage. Par ailleurs, les moyens 4 et 5 sont situés partiellement au voisinage les uns des autres et d'un même côté du panneau, en particulier à l'extérieur. Sur la figure 1, on voit que le dispositif selon l'invention comporte au moins une première unité 8 de moyens de perçage et une deuxième unité 9 de perçage perpendiculaire à la première. Il comporte en outre une troisième unité 10 parallèle à la première unité 8. On peut ainsi grâce aux moyens de déplacement 7, déplacer l'unité 8 et l'unité 10 dans le sens de

la double flèche f1. La direction de la double flèche f1 est parallèle à la ligne XX de perforations que l'on désire effectuer. On va donc réaliser en même temps que la première ligne XX de perforation une deuxième ligne YY de perforations parallèle à la ligne XX, horizontale et inférieure.

Les moyens de déplacement 7 sont des moyens de translation simultanée des deux unités 8 et 10. On effectue donc un segment de perforations grâce à la première unité, simultanément on effectue un deuxième segment de perforations grâce à la troisième unité 10, puis on déplace l'unité 8 et l'unité 10 selon une translation d'une longueur correspondant à la largeur e d'un élément de remplissage 2. On peut alors effectuer une nouvelle série de perforations situées dans le prolongement de la série de perforations précédente, c'est-à-dire sur la ligne XX ou sur la ligne YY. On effectue ainsi de proche en proche des perforations tout le long de la ligne XX et de la ligne YY.

Cependant, on désire effectuer des perforations le long d'une troisième ligne ZZ verticale de perforations, perpendiculaire aux lignes XX et YY, et ce, de préférence dans les parties extrêmes latérales d'un panneau plein 1 formé par une succession d'éléments de remplissage 2 juxtaposés. En général, la hauteur h du segment de perforations que l'on désire effectuer le long de la ligne ZZ étant supérieure à la hauteur de la seconde unité 9 de moyens de perçage, il est nécessaire de déplacer cette seconde unité 9 de moyens de perçage selon une direction perpendiculaire de la ligne XX, verticale, à savoir selon une direction de la flèche f2. On peut donc déplacer uniquement la deuxième unité 9 de moyens de perçage. On peut aussi envisager de déplacer la première unité 8 et la seconde unité 9 simultanément, à l'aide d'un moyen de débrayage.

Les moyens 6 de positionnement sont constitués par des moyens de guidage coopérant avec la frise 11 de la traverse support supérieure du véhicule (non représentée) et la frise 12 de la traverse support inférieure du véhicule (traverse non représentée). Les frises 11 et 12 sont parallèles aux lignes de perçage XX et YY. Ainsi, les unités 8 et 10 sont déplacées exactement parallèlement aux lignes XX et YY.

Les moyens de maintien 4 sont par exemple des ventouses qui peuvent déplacer l'élément de remplissage 2 selon une direction perpendiculaire au plan PP du panneau. Ces moyens de maintien 4 permettent de maintenir l'élément de remplissage rigoureusement vertical et d'autre part permettent de contrecarrer l'effort fourni par les moyens de perçage 5. En effet, ces moyens de perçage sont le plus souvent des perçeuses connues en soi, qui effectuent une poussée en direction de la flèche f3 alors que les moyens de maintien attirent l'élément de remplissage 2 selon une force opposée f4. Les forces f3 et f4 ont une direction perpendiculaire au plan PP. La force f3 est dirigée vers l'extérieur et f4 vers l'intérieur.

Plus particulièrement, la ventouse 13 est disposée sur un support 14. Selon une vue perpendiculaire au plan PP, la ventouse 13 a un profil pseudo elliptique, ainsi que le support 14, entourant les moyens de perçage 5 et leur permettant d'accéder à la surface de l'élément de remplissage. Cet élément de remplissage 2, d'une manière connue en soi comporte une âme 15, des ailes 16 et 17 perpendiculaires à l'âme 15 et des retours d'ailes 18 et 19 dirigés vers l'intrados de l'élément de remplissage. Selon une forme de réalisation, on peut concevoir que l'on a fixé les ailes 16 et 17 contiguës au moyen de rivets 20. Dans ce cas, lorsque l'on fait agir les ventouses dans le sens de la force f4, tout le panneau 1 plein va être déplacé. Au contraire, si les rivets 20 n'existent pas et que les éléments de remplissage contiguës sont placés côte à côte et coplanaires sans être fixés les uns aux autres, on va uniquement déplacer l'élément de remplissage 2 sur lequel on applique la force f4 au moyen de la ventouse 13.

Un procédé de réalisation de perforations dans un panneau plein plan 1, comporte donc la réalisation d'un cycle comprenant les étapes suivantes : on maintient verticalement un élément de remplissage 2, notamment par des ventouses 13, on effectue les perforations 3, on relâche l'élément de remplissage en ne faisant plus agir les ventouses, et, on effectue une translation de l'unité de perçeuse 8 pour la placer en regard de l'élément de remplissage adjacent 2'.

Pour réaliser des perforations le long des lignes XX, YY et ZZ dans des côtés latéraux longitudinaux d'une carrosserie 21 de camion formés de panneaux longitudinaux et de panneaux avant et arrière, on procède de la manière suivante : on amène un portique 22 (voir figure 1) en forme de U, la base du U étant située au-dessus du camion, tandis que les côtés du U sont situés de part et d'autre des côtés latéraux du camion formés par le panneau plein 1 et la panneau plein 1'. Chaque panneau plein est formé d'éléments de remplissage 2, disposés côte à côte et rivetés ou non par leurs ailes. Le portique est mobile grâce à des galets 23 coopérant avec deux rails 24 et 24' parallèles, situés parallèlement aux panneaux 1 et 1' à percer. Le portique 22 est constitué de tubes supportant des plates-formes de travail réglables en hauteur (non représentées), d'échelles d'accès aux plates-formes (non représentées) de caissons latéraux (non représentés) et de supports 25 d'unités de perçage 8, 9 et 10. Ces supports sont réglables en hauteur, plus particulièrement les supports 8 et 9., le support 8 pouvant se déplacer parallèlement à lui-même, de façon à pouvoir s'adapter à toutes hauteurs de panneaux et le support d'unité 9 pouvant aussi se déplacer en hauteur et le long d'une ligne perpendiculaire aux lignes XX de perçage souhaitée, c'est-à-dire parallèlement aux lignes ZZ de perçage des parties extrêmes des panneaux.

Chaque unité de perçage 8, 9 et 10 comporte par exemple six perçeuses régulièrement écartées les unes des autres lignées, le portique 22 portant des unités correspondantes qui permettent d'effectuer le perçage du panneau 1'.

De préférence, on effectue le perçage simultané le long des lignes XX et YY pour les deux panneaux 1 et 1'. On a donc une opération plus rapide.

On amène donc le portique 22 dans la partie extrême de la carrosserie 21, et de préférence à l'avant. L'élément de remplissage qui est situé à la partie extrême du panneau plein 1, à savoir l'élément 27, est amené à sa position nominale par les ventouses pneumatiques 13. Par ailleurs sa position est définie par les moyens de positionnement qui sont des vérins pneumatiques 6 possédant des embouts de contact 28 en matière synthétique, par exemple en "rilsan" qui s'encastrent dans le profil creux de la frise supérieure 11 de brancard de pavillon et de la frise inférieure 12 profil de rive. Les supports 14 des unités horizontales supérieures 8 et verticales 9 sont coulissants sur la hauteur c'est-à-dire que 8 peut se déplacer parallèlement à elle-même et 9 peut se déplacer selon une direction parallèle à la ligne ZZ, le déplacement étant effectué à l'aide d'une poignée 29 puis le serrage étant effectué automatiquement pour obtenir une position déterminée. Des équilibreurs forment contrepoids. Le support de l'unité 10 des perçeuses horizontales est réglable manuellement. En effet, la frise 12 est toujours au même niveau du sol. Par ailleurs, l'automatisme de l'ensemble est commandé par deux sécurités bi-manuelles.

Pour effectuer le perçage de l'élément extrême 27 ainsi que le perçage de l'élément extrême 27' du panneau plein 1' parallèle au panneau plein 1, un opérateur se place sur une plate-forme située en regard du panneau 1, tandis qu'un second opérateur se place sur une plate-forme située sur une plate-forme en regard du panneau 1'. Puis chaque opérateur appui sur les sécurités bi-manuelles, ce qui permet la mise en route du portique. Celui-ci avance automatiquement, et les opérateurs repèrent visuellement sa position. Lorsque le portique est arrivé par exemple en face des éléments de remplissage extrêmes 27 et 27', les opérateurs arrêtent le portique et effectuent un serrage pour le maintenir en position. Chaque opérateur, par l'intermédiaire d'un moyen de commande 30 fait avancer les ventouses 13 qui viennent s'appuyer sur l'élément de remplissage, puis les ventouses sont mises en action, et chaque élément de remplissage 27 et 27.' recule selon la flèche f4. Les éléments de remplissage sont ainsi bloqués en position. Puis un opérateur fait agir les unités de perçage 8 et 9, puis contrôle celui-ci et ensuite fait agir l'unité de perçage 10 et contrôle les perforations. Le support des unités 8 et 9 coulisse ensuite selon la flèche f2 et l'opérateur de la même manière effectue une autre série de perforations le long de la ligne ZZ. On arrête ensuite les ventouses et le portique est déplacé pour aller effectuer des perforations dans l'élément de remplissage adjacent aux éléments 27 et 27'. Pour effectuer les perforations des éléments de remplissage situés entre les éléments de remplissage extrêmes, les opérateurs peuvent ne pas faire agir le groupe d'unités 9, s'il n'est pas nécessaire d'effectuer des perforations verticales dans ces éléments de remplissage.

On voit donc que les unités de perçage supérieure et inférieure n'agissent pas en même temps, ce qui a pour effet de diminuer les efforts de perçage en direction opposée de l'action des ventouses et diminue ainsi la consommation instantanée en air comprimé nécessaire pour faire agir les ventouses.

En général, on désire aussi effectuer un perçage simultané haut et bas de la face avant 26 de la caisse. On utilise un bâti 31 constitué d'une structure tubulaire et comportant des unités de perçage 32 et 33, respectivement supérieure et inférieure. Chaque unité 32 et 33 comporte des perceuses alignées et de préférence au nombre de six. Les unités 32 et 33 sont horizontales, c'est-à-dire perpendiculaires au plan PP du panneau 1. Les perceuses sont toutes commandées par le même opérateur.

Comme le portique 22, le bâti 31 comporte une plate-forme de travail réglable en hauteur, une ou plusieurs échelles d'accès à cette plate-forme et des supports d'unités de perçage réglables. Le bâti 31 est mobile sur des rails 34, 35, perpendiculaires aux rails 24 et 24'.

Pour percer la face avant selon une ligne AA et une ligne BB de perforations, parallèles entre elles, et perpendiculaires au plan PP du panneau 1, situées en haut et en bas de la face avant 26, on effectue exactement les mêmes opérations que pour percer les lignes deperforations XX et YY. Le dispositif comporte des éléments correspondants à savoir des ventouses, des supports de ventouses, des embouts de contact qui s'encastrent dans le profil creux de la frise de brancard de pavillon et de la frise profil de rive. Le support de l'unité de perçage supérieure 32 est coulissant en hauteur, ce qui permet d'effectuer des perforations à une hauteur désirée et fonction de la hauteur de la caisse du camion. Le support de l'unité de perçage 33 inférieur est réglable manuellement. Comme précédemment, l'automatisme de l'ensemble est commandé par une sécurité bi-manuelle.

Le cycle de perçage est semblabe au cycle de perçage déjà décrit pour effectuer les perforations des panneaux latéraux 1 et 1'. De même, on effectue le perçage en deux phases pour diminuer les efforts de perçage qui s'opposent à l'action des ventouses et diminuer la consommation instantanée en air comprimé.

Un tel dispositif permet donc une réduction des opérations, puisqu'on effectue un nombre important de perforations simultanément, ce qui a l'avantage de procurer un gain de temps important l'immobilisation des caisses à perforer est donc relativement courte dans l'atelier et les délais de livraison sont donc beaucoup moins longs. Un avantage particulièrement intéressant est en outre le fait que les entraxes de perçage sont très réguliers, sans que lbn ait

**0072749**

besoin d'effectuer un traçage systématique pour visualiser les lignes de perforations.

Bien entendu la description précédente n'a donné que quelques modes de réalisation de l'invention et celle-ci peut comporter d'autres variantes. Ainsi, on peut effectuer des perforations verticales uniquement dans les parties extrêmes latérales du panneau 1 ou dans les parties extrêmes latérales de chaque élément de remplissage. On peut prévoir aussi de déplacer les unités horizontales des moyens de perçage indépendamment des unités verticales de moyens de perçage.

Revendications de brevet

1. Dispositif de perçage de panneaux plans pleins constitués d'éléments de remplissage coplanaires juxtaposés,
pour effectuer des perforations alignées sur au moins une
ligne de perforations, caractérisé en ce qu'il comporte :
- des moyens de maintien (4) verticalement du panneau,
et agissant perpendiculairement au plan PP du panneau,
- des moyens de perçage (5) agisant perpendiculairement
au plan du panneau,
- des moyens de positionnement (6) des moyens de perçage
(5) en regard de la ligne de perforations (XX, YY, ZZ,
AA, BB).

2. Dispositif selon la revendication 1, caractérisé en ce
qu'il comporte des moyens de déplacement (7) des moyens de
perçage (5), au moins le long de la ligne de perforations.

3. Dispositif selon l'une quelconque des revendications 1
et 2, caractérisé en ce qu'il comporte au moins une unité
(8, 9, 10, 32 et 33) d'au moins deux moyens de perçage
alignés.

4. Dispositif selon la revendication 3, caractérisé en ce
qu'il comporte au moins deux unités (8, 10) parallèles de
moyens de perçage.

5. Dispositif selon les revendications 3 et 4, caractérisé
en ce qu'il comporte au moins une première unité (8) de moyens
de perçage et au moins une seconde unité (9) perpendiculaire
à la première.

6. Dispositif selon l'une quelconque des revendications
1 à 5, caractérisé en ce que les moyens de perçage sont deux
unités (8,10) parallèles de perçeuses alignées, permettant
de réaliser deux lignes XX et YY parallèles de perforations,
les moyens de déplacement (7) étant des moyens de translation simultanée des deux unités (8,10) d'une longueur égale

2

à la largeur e d'un élément de remplissage, dans une direction parallèle aux lignes de perforations (XX , YY).

7. Dispositif selon l'une quelconque des revendications 1 à 5, caractérisé en ce que, les moyens de perçage 5, sont deux unités parallèles (8, 10) de perçeuses alignées permettant de réaliser deux lignes parallèles XX, YY de perforations, et une unité (9) de perçeuses alignées, perpendiculaire aux deux unités parallèles (8,10), permettant de réaliser au moins une ligne de perforation (ZZ) perpendiculaire aux deux lignes parallèles (XX, YY) les moyens de déplacement comportant d'une part des moyens de translation des deux unités parallèles (8, 10) d'une longueur égale à la largeur d'un panneau et d'autre part des moyens de translation de l'unité perpendiculaire (9), selon une direction perpendiculaire à la translation des unités parallèles (8,10).

8. Dispositif selon l'une quelconque des revendications 1 à 7, caractérisé en ce que les moyens de positionnement (6) sont constitués par des moyens de guidage coopérant avec les frises (11, 12) des traverses supports supérieure et inférieure du véhicule.

9. Dispositif selon l'une quelconque des revendications 1 à 8 caractérisé en ce que les moyens de maintien (4) sont des ventouses (13) déplaçant l'élément de remplissage (2) perpendiculairement au plan PP du panneau plein (1).

10. Procédé de réalisation de perforations dans un panneau plan au moyen d'un dispositif selon l'une quelconque des revendications 1 à 9, caractérisé en ce que l'on effectue au moins un cycle comportant les étapes suivantes :
- on maintient verticalement au moins un élément de remplissage (2),
- on met en place une unité de plusieurs moyens de perçage, de préférence au nombre de six,
- on effectue les perforations (3),

- on relâche l'élément de remplissage,
- on effectue une translation de l'unité des moyens de perçage pour la placer en regard de l'élément de remplissage adjacent.

11. Procédé selon la revendication 10, caractérisé en ce que l'on effectue des perforations disposées respectivement sur deux lignes (XX, YY),parallèles, situées respectivement dans la partie extrême supérieure de l'élément de remplissage et dans la partie extrême inférieure.

12. Procédé selon la revendication 10, caractérisé en ce que l'on effectue une ligne de perforations horizontales (XX) dans la partie extrême supérieure d'un élément de remplissage et simultanément une ligne de perforations verticales (ZZ), perpendiculaire à la première ligne (XX), située au bord latéral de l'élément de remplissage, et simultanément une ligne de perforations (YY) horizontale, située dans la partie extrême inférieure de l'élément de remplissage.

13. Procédé selon l'une quelconque des revendications 10 à 12 caractérisé en ce que les éléments de remplissage (2) sont solidarisés entre eux.

14. Machine pour le perçage de carrosserie de véhicule, caractériséeen ce qu'elle comporte un portique transversal (22), mobile, en forme de U, pour le perçage selon deux lignes parallèles de perforations (XX, YY) et une ligne verticale (ZZ) perpendiculaire aux précédentes, de panneaux pleins (1,1') latéraux de la carrosserie, et un bâti (31) mobile pour le perçage selon deux lignes parallèles de perforations (AA et BB), horizontales, de la face avant (26) de la carrosserie du véhicule.

15. Machine selon la revendication 14, caractériséeen ce que les portiques comportent des moyens de maintien des panneaux (1 et 1') latéraux et de la face avant (26), des

0072749

4

moyens de perçage disposés perpendiculairement aux plans respectifs des panneaux de la face avant, des moyens de positionnement des moyens de perçage situés en regard des lignes de perforations (XX, YY, ZZ, AA, BB).

16. Machine selon l'une quelconque des revendications 14 et 15, caractériséeen ce que le portique (22) est mobile parallèlement au plan des panneaux latéraux (1, 1') et que le bâti (31) est mobile perpendiculairement au plan (PP) desdits panneaux.

FIG.1

FIG.2

FIG.3

0072749

**0072749**
Numéro de la demande

**RAPPORT DE RECHERCHE EUROPEENNE**

Office européen
des brevets

EP   82 40 1512

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 23 B   39/16 |
| A | AT-B-  352 987  (GANNER) | 1-4,6, 10,14 | B 23 B   39/00 |
| | --- | | |
| A | DE-A-2 704 415  (SCHEER) | 1-3 | |
| | --- | | |
| A | FR-A-2 050 688  (SIRUGUE) | 1-2 | |
| | --- | | |
| A | US-A-3 507 025  (ANRENEY) | 1-3 | |
| | ----- | | |

| DOMAINES TECHNIQUES RECHERCHES (Int. Cl. ³) |
|---|
| B 23 B |
| B 27 C |

Le présent rapport de recherche a été établi pour toutes les revendications

| Lieu de la recherche | Date d'achèvement de la recherche | Examinateur |
|---|---|---|
| LA HAYE | 04-11-1982 | BOGAERT F.L. |